(19) Europäisches Patentamt
European Patent Office
Office européen des brevets

(11) EP 2 883 895 B1

(12) EUROPÄISCHE PATENTSCHRIFT

(45) Veröffentlichungstag und Bekanntmachung des Hinweises auf die Patenterteilung:
**13.09.2017 Patentblatt 2017/37**

(51) Int Cl.:
***C08G 18/73*** *(2006.01)* ***C07D 273/04*** *(2006.01)*
***C08G 18/02*** *(2006.01)* ***C08G 18/22*** *(2006.01)*

(21) Anmeldenummer: **13196508.9**

(22) Anmeldetag: **10.12.2013**

# (54) Iminooxadiazindion-Polyisocyanate

Polyisocyanates containing iminooxadiazine dione groups

Polyisocyanates contenant des groupes iminooxadiazine diones.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.06.2015 Patentblatt 2015/25**

(73) Patentinhaber: **Covestro Deutschland AG**
**51373 Leverkusen (DE)**

(72) Erfinder:
- **Laas, Hans-Josef Dr.**
  **51519 Odenthal (DE)**
- **Mager, Dieter**
  **51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 0 798 299**
**EP-A2- 0 169 707**
**WO-A2-2009/063245**
**US-A- 3 426 025**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 883 895 B1

## Beschreibung

Die Erfindung betrifft ein Verfahren zur Herstellung von Polyisocyanaten. Weitere Gegenstände der Erfindung sind nach dem Verfahren erhältliche Polyisocyanate und aus den Polyisocyanaten erhältliche Polyurethane und Polyharnstoffe.

Ein Verfahren zur Herstellung von Polyisocyanaten mit einem hohen Gehalt an Allophanat- und Isocyanuratgruppen wird in der JP-A 61-151179 offenbart. Als Katalysator der Umsetzung wird beispielsweise Zirkoniumbutoxid eingesetzt.

Die JP-A 61-151179 beschreibt keine Polyisocyanate, die einen hohen Anteil an Iminooxadiazindiongruppen in den Polyisocyanaten aufweisen. Derartige Polyisocyanate sind jedoch vorteilhaft, da sie bei gleichzeitig hoher Isocyanatfunktionalität sehr niedrige Viskositäten aufweisen und beispielsweise für die Verwendung in Lacksystemen geeignet sind. Ein Verfahren zur Herstellung von Polyisocyanaten mit einem hohen Anteil an Iminooxadiazindiongruppen wird schon in der EP 0 798 299 A1 offenbart. Als Katalysator wird keine ein- oder mehrkernige Komplexverbindung von Titan, Zirkonium und/oder Hafnium verwendet. Aufgabe der vorliegenden Erfindung war es daher, ein Verfahren zur Herstellung von Polyisocyanaten mit hohem Anteil an Iminooxadiazindiongruppen zur Verfügung zu stellen.

Diese Aufgabe wird bei dem erfindungsgemäßen Verfahren dadurch gelöst, dass eine Isocyanatkomponente in Gegenwart einer ein- oder mehrkernigen Komplexverbindung von Titan, Zirkonium und/oder Hafnium als Katalysator zu Polyisocyanaten, die einen Anteil an Iminooxadiazindiongruppen bezogen auf die Gesamtmenge von Isocyanurat- und Iminooxadiazindiongruppen von $\geq$ 20 mol-% aufweisen, umgesetzt wird.

Gemäß einer ersten bevorzugten Ausführungsform der Erfindung kann die Komplexverbindung wenigstens ein Zentralatom M aus Titan, Zirkonium und Hafnium umfassen, bei dem ein oder mehrere Liganden über Elemente der 15. und/oder 16. Gruppe des Periodensystems, bevorzugt über Stickstoff, Sauerstoff und/oder Schwefel und besonders bevorzugt über Sauerstoff an das Zentralatom M koordiniert sind. Ein Vorteil dieser Komplexverbindungen ist, dass sie sich auf einfache Weise herstellen lassen.

Besonders bevorzugt ist hierbei, wenn als Katalysator wenigstens ein Alkoholat der allgemeinen Formel (I)

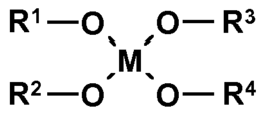 (I)

verwendet wird, in der

M für Titan, Zirkonium oder Hafnium steht,

$R^1$, $R^2$, $R^3$ und $R^4$ für gleiche oder verschiedene Reste stehen und jeweils einen gesättigten oder ungesättigten, linearen oder verzweigten, gegebenenfalls substituierten aliphatischen, cycloaliphatischen, aromatischen oder araliphatischen, bevorzugt aliphatischen oder cycloaliphatischen Rest bedeuten, der 1 bis 18 Kohlenstoffatome, bevorzugt 1 bis 8 Kohlenstoffatome und gegebenenfalls bis zu 3 Heteroatome aus der Reihe Sauerstoff, Schwefel, Stickstoff, bevorzugt bis zu 3 Sauerstoffatome enthalten kann, und wobei $R^1$, $R^2$, $R^3$ und $R^4$ auch in beliebiger Kombination untereinander zusammen mit M und mindestens zwei Sauerstoffatomen und gegebenenfalls weiteren Stickstoff- oder Sauerstoffatomen heterocyclische Ringe mit 3 bis 6 Kohlenstoffatomen bilden können.

Folgende Alkoholate sind beispielsweise als Katalysator geeignet: Titantetramethylat, Titantetraethylat, Titantetra-n-propylat, Titantetraisopropylat, Titantetra-n-butylat, Titantetraisobutylat, Titantetra-sec-butylat, Titantetra-tert-butylat, Titantetra-2-ethylhexylat, Titantetra-octylat, Titantetra-cyclohexylat, Titantetrastearylat, Titantetra(methoxyethylat), Titantetra(ethoxyethylat), Titantetrabenzylat, Titantetraphenolat, Zirkoniumtetramethylat, Zirkoniumtetraethylat, Zirkoniumtetra-n-propylat, Zirkoniumtetra-isopropylat, Zirkoniumtetra-n-butylat, Zirkoniumtetratert-butylat, Zirkoniumtetra-2-methyl-2-butylat, Zirkoniumtetra-2-ethylhexylat, Zirkoniumtetra-2-methoxymethyl-2-propylat, Zirkoniumtetraphenolat, Hafniumtetramethylat, Hafniumtetraethylat, Hafniumtetra-n-propylat, Hafniumtetra-isopropylat, Hafniumtetra-n-butylat, Hafniumtetra-tert-butylat, Hafniumtetra-2-methyl-2-methoxypropylat, Hafniumtetra-2,2-diethylpropylat, Hafniumtetra-2-ethylhexylat und/oder Hafniumtetraoctylat. Bevorzugt geeignet sind Titantetra-n-butylat, Zirkoniumtetraethylat, Zirkoniumtetra-n-butylat, Zirkoniumtetra-2-ethylhexylat, Hafniumtetraethylat, Hafniumtetra-n-butylat und/oder Hafniumtetra-2-ethylhexylat.

Gemäß einer weiteren, bevorzugten Ausführungsform, wird als Katalysator wenigstens ein Carboxylat der allgemeinen Formeln (II) oder (III)

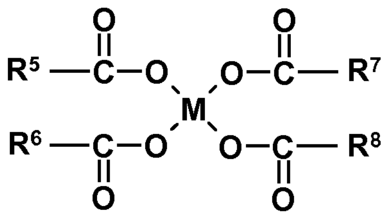 (II) 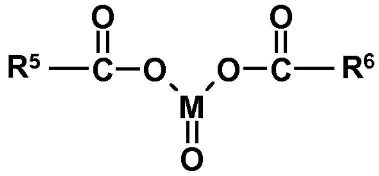 (III)

verwendet, in denen

M für Titan, Zirkonium oder Hafnium steht,

$R^5$, $R^6$, $R^7$ und $R^8$ für gleiche oder verschiedene Reste stehen und jeweils einen gesättigten oder ungesättigten, linearen oder verzweigten aliphatischen oder cycloaliphatischen, einen gegebenenfalls substituierten aromatischen oder araliphatischen Rest bedeuten, der 1 bis 18 Kohlenstoffatome und gegebenenfalls bis zu 3 Heteroatome aus der Reihe Sauerstoff, Schwefel, Stickstoff enthalten kann, bevorzugt für gleiche oder verschiedene Reste stehen und jeweils einen gesättigten oder ungesättigten, linearen oder verzweigten aliphatischen oder cycloaliphatischen Rest bedeuten, der 1 bis 18 Kohlenstoffatome und gegebenenfalls bis zu 3 Heteroatome aus der Reihe Sauerstoff, Schwefel, Stickstoff enthalten kann und besonders bevorzugt für gleiche Reste stehen und jeweils einen gesättigten oder ungesättigten, linearen oder verzweigten aliphatischen oder cycloaliphatischen Rest bedeuten, der 1 bis 8 Kohlenstoffatome und gegebenenfalls bis zu 3 Sauerstoffatome enthalten kann, und wobei $R^5$, $R^6$, $R^7$ und $R^8$ in Formel (II) und $R^5$ und $R^6$ in Formel (III) auch in beliebiger Kombination untereinander zusammen mit M und mindestens zwei Sauerstoffatomen und gegebenenfalls weiteren Stickstoff- oder Sauerstoffatomen heterocyclische Ringe mit 3 bis 6 Kohlenstoffatomen und bevorzugt zusammen mit M und zwei Sauerstoffatomen heterocyclische Ringe mit 2 oder 3 Kohlenstoffatomen bilden können.

Besonders bevorzugte Carboxylate der allgemeinen Formel (II) sind: Titantetra-2-ethylhexanoat, Titantetrastearat, Titantetraacrylat, Titantetrabenzoat, Zirkoniumtetraacetat, Zirkoniumtetrapropionat, Zirkoniumtetrabutanoat, Zirkoniumtetraoctanoat, Zirkoniumtetra-2-ethylhexanoat, Zirkoniumtetraneodecanoat, Zirkoniumtetrastearat, Zirkoniumoxalat, Zirkoniumglykolat, Zirkoniumlactat, Zirkoniumtetraacrylat, Zirkoniumtetramethacrylat, Zirkoniumtetranaphthenat, Hafniumtetraacetat, Hafniumoxalat, Hafniumtetraoctoat, Hafniumtetra-2-ethylhexanoat und/oder Hafniumtetraneodecanoat.

Besonders bevorzugte Carboxylate der allgemeinen Formel (III) sind: Titanylacetat, Titanylpropionat, Titanylbutanoat, Titanylpentanoat, Titanylhexanoat, Titanyl-2-ethylhexanoat, Titanyloctanoat, Zirkonylacetat, Zirkonyloctanoat, Zirkonyldecanoat, Zirkonyldodecanoat, Zirkonyltetradecanoat, Zirkonylpentadecanoat, Zirkonylstearat, Zirkonyldimethacrylat, Zirkonylcyclopentanecarboxylat, Zirkonylcyclohexanecarboxylat, Zirkonyllinolat, Zirkonyllinolenat, Zirkonyloleat, Zirkonylbenzoat und/oder Zirkonyldiphenylacetat.

Generell liegt ein großer Vorteil der hier eingesetzten Katalysatoren darin, dass diese leicht handhabbare, ungefährliche Verbindungen darstellen.

Im Allgemeinen wird der Katalysator in Mengen von 0,0005 bis 2,0 Gew.-%, bevorzugt von 0,0010 bis 1,0 Gew.-% und besonders bevorzugt von 0,0015 bis 0,5 Gew.-% bezogen auf die Isocyanatkomponente eingesetzt. Der Katalysator kann in Substanz eingesetzt werden. Ein Vorteil ist hierbei, dass die dann erhaltenen Polyisocyanate keine Verunreinigungen durch ggf. mitverwendete Katalysatorlösungsmittel enthalten.

Die Katalysatoren können aber auch als Mischungen des Katalysators mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,01 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propioiacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Bevorzugt kommen beim erfindungsgemäßen Verfahren Katalysatorlösungsmittel zum Einsatz, die gegenüber

Isocyanaten reaktive Gruppen tragen und in das Polyisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Im Bezug auf die Isocyanatkomponente ist es bevorzugt, dass als Isocyanatkomponente wenigstens ein aliphatisches, cycloaliphatisches oder araliphatisches Isocyanat, bevorzugt wenigstens ein aliphatisches oder araliphatisches Diisocyanat verwendet wird. Die Isocyanatkomponente kann nach beliebigen Verfahren, z. B. durch Phosgenierung oder auf phosgenfreiem Weg, beispielsweise durch Urethanspaltung, hergestellt werden.

Als Isocyanatkomponente geeignete Verbindungen sind beispielsweise solche des Molekulargewichtsbereiches 140 bis 400 g/mol, wie z. B. 1,4-Diisocyanatobutan, 1,5-Diisocyanatopentan, 1,6-Diisocyanatohexan (HDI), 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 1,3- und 1,4-Bis(isocyanatomethyl)cyclohexan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyciohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Ganz besonders bevorzugt ist, dass als Isocyanatkomponente wenigstens 1,6-Diisocyanatohexan, 1,3- oder 1,4-Bis-(isocyanatomethyl)benzol und insbesondere bevorzugt 1,6-Diisocyanatohexan verwendet wird.

In Weiterbildung der Erfindung ist vorgesehen, dass die Isocyanatkomponente mit einer hydroxyfunktionellen Komponente vermischt wird und in Gegenwart des Katalysators zu den Polyisocyanaten umgesetzt wird.

Gemäß einer bevorzugten Ausführungsform umfasst die verwendete hydroxyfunktionelle Komponente bis zu 0,0049 Gew.-% bezogen auf die Isocyanatkomponente an phenolischen, hydroxyfunktionellen Verbindungen.

Für den Einsatz als phenolische, hydroxyfunktionelle Verbindungen sind beispielsweise folgende Verbindungen geeignet: Phenol, die isomeren Kresole, 2-Ethylphenol, 4-Ethylphenol, 4-Octylphenol, 4-tert-Octylphenol, die isomeren Nonylphenole, 1-Naphthol, 2-Naphthol sowie die isomeren Dihydroxy- und/oder Trihydroxybenzole.

Insbesondere bevorzugt ist weiterhin, dass die hydroxyfunktionelle Komponente frei von phenolischen, hydroxyfunktionellen Verbindungen ist.

Gemäß einer weiteren bevorzugten Ausführungsform umfasst die verwendete hydroxyfunktionelle Komponente bis zu 5,0 Gew.-%, bevorzugt bis zu 2,5 Gew.-% und besonders bevorzugt bis zu 0,49 Gew.-% bezogen auf die Isocyanatkomponente an aliphatischen, hydroxyfunktionellen Verbindungen.

In einer weiteren besonders bevorzugten Ausführungsform umfasst die hydroxyfunktionelle Komponente wenigstens einen linearen, verzweigten und gegebenenfalls substituierten Mono-, Di- oder Trialkohol mit 1 bis 18 Kohlenstoffatomen, bevorzugt mit 1 bis 9 Kohlenstoffatomen und besonders bevorzugt mit 1 bis 6 Kohlenstoffatomen.

In einer weiteren ganz besonders bevorzugten Ausführungsform besteht die hydroxyfunktionelle Komponente aus einem linearen, verzweigten und gegebenenfalls substituierten Mono-, Di- oder Trialkohol mit 1 bis 18 Kohlenstoffatomen, bevorzugt mit 1 bis 9 Kohlenstoffatomen und besonders bevorzugt mit 1 bis 6 Kohlenstoffatomen.

Für den Einsatz als aliphatische, hydroxyfunktionelle Verbindungen sind beispielsweise folgende Verbindungen geeignet: Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, 1,2-Ethandiol, 1,2- und 1,3-Propandiol, die isomeren Butandiole, Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat, aber auch einfache Ester- oder Etheralkohole, wie z. B. 2-Hydroxypropionsäureethylester, 2-Hydroxypropionsäure-n-butylester, Ethylenglykolmonomethylether, Ethylenglykolmonoethyl-ether, Ethylenglykolmonobutylether, Diethylenglykolmonomethylether, Diethylenglykolmono-ethylether, Diethylenglykolmono-butylether, Hydroxypivalinsäureneopentylglykolester, Diethylenglykol und Dipropylenglykol oder beliebige Gemische solcher Alkohole. In einer bevorzugten Ausführungsform kann die Isocyanatkomponente zur Durchführung des erfindungsgemäßen Verfahrens, gegebenenfalls unter Inertgas, wie beispielsweise Stickstoff, und gegebenenfalls in Gegenwart eines Lösungsmittels bei einer Temperatur zwischen 0 und 120°C, vorzugsweise 20 bis 100°C, besonders bevorzugt 40 bis 100°C vorgelegt werden. Als Lösungsmittel sind hier insbesondere die, zuvor, als gegenüber Isocyanatgruppen inerten, angegebenen Katalysatorlösungsmittel zu verstehen.

Nach dem Vorlegen der Isocyanatkomponente kann der Katalysator bzw. eine Mischung des Katalysators mit dem Katalysatorlösungsmittel in der oben angegebenen Menge zugegeben werden. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Bevorzugt ist auch, wenn die gegebenenfalls eingesetzte hydroxyfunktionelle Komponente der Isocyanatkomponente vor der Zugabe des Katalysators zugesetzt wird.

Gemäß einer weiteren bevorzugten Ausführungsform umfasst die Summe an eingesetztem hydroxyfunktionellem Katalysatorlösungsmittel und aliphatischen, hydroxyfunktionellen Verbindungen bis zu 5,0 Gew.-%, bevorzugt bis zu 2,5 Gew.-% und besonders bevorzugt bis zu 0,49 Gew.-% bezogen auf die Isocyanatkomponente.

Gemäß einer weiteren bevorzugten Ausführungsform wird die Umsetzung bei einer Temperatur im Bereich zwischen 40 und 150°C, bevorzugt zwischen 85 und 135°C und besonders bevorzugt zwischen 105 und 125°C durchgeführt.

Unabhängig von der Art der Umsetzung kann im Falle der Mitverwendung hydroxyfunktioneller Komponenten die Umsetzung in der Regel soweit über den einer vollständigen Allophanatisierung entsprechenden Umsatzgrad hinaus geführt werden, dass die erfindungsgemäßen Verfahrensprodukte einen Anteil an Allophanatgruppen von höchstens 70 mol-%, bevorzugt von höchstens 60 mol-%, besonders bevorzugt von höchstens 50 mol-%, bezogen auf die Gesamtmenge an Allophanat-, Isocyanurat- und Iminooxadiazindiongruppen aufweisen.

Unter einem Reaktionsgemisch wird vorliegend eine Mischung der Isocyanatkomponente, des Katalysators, gegebenenfalls weiterer Einsatzstoffe und der gebildeten Polyisocyanate verstanden.

Das Verhältnis an Iminooxadiazindion-, Isocyanurat-, Uretdion- und/oder Allophanatgruppen kann beim erfindungsgemäßen Verfahren z. B. durch die NMR-spektroskopische Untersuchung der Reaktionsgemische oder der resultierenden Polyisocyanate bestimmt werden. Bevorzugt lässt sich hierbei die $^{13}$C-NMR-Spektroskopie, vorzugsweise protonenentkoppelt, einsetzen, da die Iminooxadiazindion-, Isocyanurat-, Uretdion- und/oder Allophanatgruppen charakteristische Signale liefern.

Die im Rahmen der vorliegenden Anmeldung gemachten Angaben (mol-%) bezüglich der unter den erfindungsgemäßen Verfahrensbedingungen entstehenden Iminooxadiazindion-, Isocyanurat-, Uretdion- und/oder Allophanatgruppen wurden aus $^{13}$C-NMR-Spektren errechnet und beziehen sich jeweils auf die Summe an vorliegenden Isocyanurat-, Iminooxadiazindion-, Uretdion- und gegebenenfalls Allophanatgruppen.

In einer weiteren bevorzugten Ausführungsform wird der Verlauf der Umsetzung beim erfindungsgemäßen Verfahren über die Abnahme des Gehaltes an Isocyanatgruppen in der Reaktionsmischung verfolgt. Der Gehalt an Isocyanatgruppen in der Reaktionsmischung kann, ebenso wie der Gehalt an Isocyanatgruppen der nach dem erfindungsgemäßen Verfahren erhaltenen Polyisocyanate, z. B. titrimetrisch bestimmt werden. Der Gehalt an Isocyanatgruppen wird im Folgenden als NCO-Gehalt bezeichnet.

Gemäß einer weiteren bevorzugten Ausführungsform wird die Umsetzung so weit geführt, dass das Reaktionsgemisch einen Oligomerisierungsgrad von 10 bis 40%, vorzugsweise von 15 bis 30% aufweist. Vorliegend ist unter "Oligomerisierungsgrad" der Prozentsatz, der in der Ausgangsmischung ursprünglich vorhandenen Isocyanatgruppen zu verstehen, der während der erfindungsgemäßen Umsetzung verbraucht wird. Der Oligomerisierungsgrad in Prozent kann nach folgender Formel berechnet werden:

$$\text{Oligomerisierungsgrad} = (\text{NCO}_{\text{Start}} - \text{NCO}_{\text{Ende}}) / \text{NCO}_{\text{Start}} \times 100$$

Die Umsetzung kann z. B. nach Erreichen des angestrebten Oligomerisierungsgrades abgebrochen werden. Dieser Oligomerisierungsgrad wird im allgemeinen nach einer Reaktionszeit von 30 Minuten bis 8 Stunden, vorzugsweise von 1 bis 6 Stunden erreicht.

Ein Abbruch der Umsetzung kann beispielsweise durch Abkühlen des Reaktionsgemisches auf Raumtemperatur erfolgen. Im Allgemeinen wird die Umsetzung aber durch Zugabe eines Katalysatorgiftes und gegebenenfalls nachfolgendes kurzzeitiges Erhitzen der Reaktionsmischung beispielsweise auf eine oberhalb 80°C liegende Temperatur beendet.

Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, Dodecylbenzolsulfon-säure, p-Toluolsulfon-säuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester sein.

Die zur Beendigung der Umsetzung benötigte Menge des Katalysatorgiftes richtet sich dabei nach der Menge des verwendeten Katalysators; im allgemeinen wird eine äquivalente Menge des Katalysatorgiftes, bezogen auf den zu Beginn eingesetzten Katalysator, eingesetzt. Berücksichtigt man allerdings eventuell während der Umsetzung auftretende Verluste an Katalysator, so können zur Beendigung der Umsetzung auch schon 20 bis 80 Äquivalent-% des Katalysatorgiftes, bezogen auf die Menge des ursprünglich eingesetzten Katalysators, ausreichen.

Die genannten Katalysatorgifte können sowohl in Substanz als auch in einem geeigneten Lösungsmittel gelöst eingesetzt werden. Geeignete Lösungsmittel sind beispielsweise die bereits oben als mögliche Katalysatorlösungsmittel beschriebenen Lösungsmittel oder deren Gemische. Der Verdünnungsgrad kann innerhalb eines sehr breiten Bereichs frei gewählt werden, geeignet sind beispielsweise Lösungen ab einer Konzentration von 10 Gew.-%.

Neben den genannten Lösungsmitteln können beim erfindungsgemäßen Verfahren auch die obengenannten Isocyanatkomponenten als Lösungsmittel für die Katalysatorgifte dienen, sofern diese ausreichend inert gegenüber Isocyanatgruppen sind, so dass sich lagerstabile Lösungen herstellen lassen.

Vorzugsweise wird das Reaktionsgemisch nach beendeter Umsetzung durch Dünnschichtdestillation im Vakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Isocyanatkomponenten und gegebenenfalls mitverwendeten Lösungsmitteln) befreit.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Polyisocyanat abgetrennt.

Gemäß einer weiteren, bevorzugten Ausführungsform verbleibt der Katalysator in den Polyisocyanaten, da auf diese Weise bei gleichbleibenden sehr guten Eigenschaften der erfindungsgemäßen Polyisocyanate eine aufwendige Entfernung vermieden werden kann.

Unabhängig von der Art der Aufarbeitung erhält man als Produkte des erfindungsgemäßen Verfahrens klare, in der Regel praktisch farblose Polyisocyanate mit einem Anteil an Iminooxadiazindiongruppen von mindestens 20 mol-%, bevorzugt mindestens 25 mol-%, besonders bevorzugt mindestens 30 mol-%, jeweils bezogen auf die Gesamtmenge an Isocyanurat- und Iminooxadiazindiongruppen.

Bevorzugt ist auch, wenn die erhaltenen Polyisocyanate einen NCO-Gehalt von 17,0 bis 24,5 Gew.-%, vorzugsweise 18,0 bis 24,0 Gew.-%, besonders bevorzugt 20,0 bis 23,5 Gew.-%, aufweisen.

Ein weiterer Gegenstand der Erfindung sind Polyisocyanate, erhältlich nach dem erfindungsgemäßen Verfahren.

Die erfindungsgemäßen Polyisocyanate eignen sich in hervorragender Weise als Härter für Zweikomponenten-Polyurethanlacke, in denen als hydroxyfunktionelle Komponente die üblichen Polyetherpolyole, Polyesterpolyole, Polycarbonatpolyole und/oder Polyacrylatpolyole als Reaktionspartner für die Polyisocyanate vorliegen.

Die erfindungsgemäßen Polyisocyanate können aufgrund ihrer niedrigen Viskosität lösemittelfrei eingesetzt werden, lassen sich bei Bedarf aber auch mit üblichen Lösungsmitteln, beispielsweise den zuvor genannten, beim erfindungsgemäßen Verfahren gegebenenfalls mitzuverwendenden gegenüber Isocyanaten inerten Lösungsmitteln, trübungsfrei verdünnen. Im allgemeinen besitzen die mit den erfindungsgemäßen Polyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethyl-caproat, Dibutylzinn(IV)-dilaurat, Wismut(III)-2-ethylhexanoat, Wismut(III)-octoat oder Molybdänglykolat.

Die erfindungsgemäßen Polyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen

Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gemäß einer bevorzugten Ausführungsform können die Isocyanatgruppen der Polyisocyanate anteilig oder vollständig mit wenigstens einem Blockierungsmittel umgesetzt sein.

Bei diesen Blockierungsmitteln handelt es sich insbesondere um, aus der Polyurethanchemie an sich bekannte Blockierungsmittel wie beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert-butylamin oder beliebige Gemische dieser Blockierungsmittel.

Die erfindungsgemäßen Polyisocyanate können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit den Isocyanatgruppen der erfindungsgemäßen Polyisocyanate abreagieren.

In blockierter Form lassen sich die erfindungsgemäßen Polyisocyanate auch in Kombination mit den obengenannten Lackbindemitteln oder Lackbindemittelkomponenten im Sinne von Einkomponenten-PUR-Einbrennsystemen einsetzen.

In allen Lackkombinationen liegen die Polyisocyanate und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen. Gegebenenfalls können die erfindungsgemäßen Polyisocyanate in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Polyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Neben der bevorzugten Verwendung als Vernetzerkomponenten für lösemittelfreie, lösemittelhaltige oder wässrige 2K-PUR-Lacke eignen sich die erfindungsgemäßen Polyisocyanate hervorragend als Vernetzer für lösemittelfreie oder lösemittelhaltige Klebstoffbindemittel oder wässrige Dispersionsklebstoffe, oder auch als Aufbaukomponente zur Herstellung lichtechter kompakter oder geschäumter Polyurethan-Formkörper.

Daher sind ein weiterer Gegenstand der Erfindung Polyurethane, erhältlich durch Umsetzung der erfindungsgemäßen Polyisocyanate mit wenigstens einer hydroxyfunktionellen Komponente.

Als hydroxyfunktionelle Komponente lassen sich hierbei bevorzugt Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren einsetzen.

Noch ein weiterer Gegenstand der Erfindung sind Polyharnstoffe, die durch Umsetzung der erfindungsgemäßen Polyisocyanate mit wenigstens einer aminofunktionellen Komponente erhältlich sind.

Geeignete aminofunktionelle Komponenten sind insbesondere Polyasparaginsäureester, wie sie beispielsweise nach dem Verfahren der EP-B 0 403 921 durch Umsetzung von Diaminen mit Fumarsäure- bzw. Maleinsäureestern erhältlich sind.

Die Erfindung wird im Folgenden an Hand von Beispielen näher erläutert.

## Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Gehalte (mol-%) der unter den erfindungsgemäßen Verfahrensbedingungen entstehenden Iminooxadiazindion-, Isocyanurat-, Uretdion- und/oder Allophanatgruppen wurden aus den Integralen protokonenentkoppelter $^{13}C$-NMR-Spektren (aufgenommen an einem Gerät Bruker DPX-400) errechnet und beziehen sich jeweils auf die Summe an vorliegenden Isocyanurat-, Iminooxadiazindion-, Uretdion- und gegebenenfalls Allophanatgruppen. Die einzelnen Strukturelemente weisen folgende chemische Verschiebungen (in ppm) auf: Iminooxadiazindion: 147.8, 144.3 und 135.3; Isocyanurat: 148.4; Uretdion: 157.1; Allophanat: 155.7 und 153.8.

**Beispiel 1** (erfindungsgemäß)

840 g (5 mol) Hexamethylendiisocyanat (HDI) wurden bei einer Temperatur von 115°C unter trockenem Stickstoff und Rühren vorgelegt und im Abstand von jeweils ca. 40 min viermal mit je 0,04 g Zirkoniumtetra-n-butylat als Katalysator versetzt. Unmittelbar nach Katalysatorzugabe war dabei jeweils eine schwache, rasch abklingende Exothermie zu beobachten, durch die sich das Reaktionsgemisch kurzzeitig auf 118 - 119°C erwärmte. Im Anschluß an die Zugabe der letzten Katalysatormenge wurde weitere 2 Stunden bei 115 °C gerührt, bis ein NCO-Gehalt von 42,5 % erreicht war. Der Katalysator wurde dann durch Zugabe von 0,5 g einer 10 %igen Lösung von Isophthalsäuredichlorid in HDI und 15 minütiges Nachrühren deaktiviert. Das nicht umgesetzte monomere HDI wurde schließlich bei einer Temperatur von 130°C und einem Druck von 0,1 mbar im Dünnschichtverdampfer abgetrennt. Man erhielt ein praktisch farbloses, klares Polyisocyanatgemisch, das folgende Kenndaten und Zusammensetzung aufwies:

| | |
|---|---|
| NCO-Gehalt: | 22,7% |
| monomeres HDI: | 0,09% |
| Viskosität (23°C): | 1450 mPas |
| | |
| Iminooxadazindiongruppen: | 32,8 mol-% |
| Isocyanuratgruppen: | 64,2 mol-% |
| Uretdiongruppen: | 3,0 mol-% |
| | |
| Iminooxadiazindion/Isocyanurat: | 33,8 : 66,2 |

**Beispiel 2** (erfindungsgemäß)

Nach dem in Beispiel 1 beschriebenen Verfahren wurden 840 g (5 mol) HDI durch portionsweise Zugabe von insgesamt 0,2 g Zirkoniumtetra-2-ethylhexylat umgesetzt. Die Reaktion wurde bei einem NCO-Gehalt von 43,8 % wie in Beispiel 1 beschrieben mit 1,4 g einer 10 %igen Lösung von Isophthalsäuredichlorid in HDI abgebrochen und das Reaktionsgemisch destillativ aufgearbeitet. Man erhielt ein praktisch farbloses, klares Polyisocyanatgemisch, das folgende Kenndaten und Zusammensetzung aufwies:

| | |
|---|---|
| NCO-Gehalt: | 23,1 % |
| monomeres HDI: | 0,22 % |
| Viskosität (23°C): | 840 mPas |
| | |
| Iminooxadazindiongruppen: | 37,5 mol-% |
| Isocyanuratgruppen: | 60,4 mol-% |
| Uretdiongruppen: | 2,1 mol-% |
| | |
| Iminooxadiazindion/Isocyanurat: | 38,3 : 61,7 |

**Beispiel 3** (erfindungsgemäß)

Nach dem in Beispiel 1 beschriebenen Verfahren wurden 840 g (5 mol) HDI durch portionsweise Zugabe von insgesamt 0,8 g einer 10 %igen Lösung von Zirkoniumtetraethylat in Chlorbenzol umgesetzt. Die Reaktion wurde bei einem NCO-Gehalt von 41,8 % wie in Beispiel 1 beschrieben mit 0,6 g einer 10 %igen Lösung von Isophthalsäuredichlorid in HDI abgebrochen und das Reaktionsgemisch destillativ aufgearbeitet. Man erhielt ein praktisch farbloses, klares Polyisocyanatgemisch, das folgende Kenndaten und Zusammensetzung aufwies:

| | |
|---|---|
| NCO-Gehalt: | 22,2 % |
| monomeres HDI: | 0,15% |
| Viskosität (23°C): | 1950 mPas |
| | |
| Iminooxadazindiongruppen: | 20,4 mol-% |
| Isocyanuratgruppen: | 75,4 mol-% |

(fortgesetzt)

| | |
|---|---|
| Uretdiongruppen: | 4,2 mol-% |
| Iminooxadiazindion/Isocyanurat: | 21,3 : 78,7 |

**Beispiel 4** (erfindungsgemäß)

Nach dem in Beispiel 1 beschriebenen Verfahren wurden 840 g (5 mol) HDI durch portionsweise Zugabe von insgesamt 0,24 g Titantetra-n-butylat umgesetzt. Die Reaktion wurde bei einem NCO-Gehalt von 44,5 % wie in Beispiel 1 beschrieben mit 0,8 g einer 10 %igen Lösung von Isophthalsäuredichlorid in HDI abgebrochen und das Reaktionsgemisch destillativ aufgearbeitet. Man erhielt ein gelbes klares Polyisocyanatgemisch, das folgende Kenndaten und Zusammensetzung aufwies:

| | |
|---|---|
| NCO-Gehalt: | 23,2 % |
| monomeres HDI: | 0,14 % |
| Viskosität (23°C): | 1070 mPas |
| Iminooxadazindiongruppen: | 20,1 mol-% |
| Isocyanuratgruppen: | 76,2 mol-% |
| Uretdiongruppen: | 3,7 mol-% |
| Iminooxadiazindion/Isocyanurat: | 20,9 : 79,1 |

**Beispiel 5** (erfindungsgemäß)

Nach dem in Beispiel 1 beschriebenen Verfahren wurden 840 g (5 mol) HDI durch portionsweise Zugabe von insgesamt 0,2 g Hafniumtetra-n-butylat umgesetzt. Die Reaktion wurde bei einem NCO-Gehalt von 44,9 % wie in Beispiel 1 beschrieben mit 1,1 g einer 10 %igen Lösung von Isophthalsäuredichlorid in HDI abgebrochen und das Reaktionsgemisch destillativ aufgearbeitet. Man erhielt ein farbloses klares Polyisocyanatgemisch, das folgende Kenndaten und Zusammensetzung aufwies:

| | |
|---|---|
| NCO-Gehalt: | 23,5 % |
| monomeres HDI: | 0,10 % |
| Viskosität (23°C): | 840 mPas |
| Iminooxadazindiongruppen: | 37,6 mol-% |
| Isocyanuratgruppen: | 59,0 mol-% |
| Uretdiongruppen: | 3,4 mol-% |
| Iminooxadiazindion/Isocyanurat: | 38,9 : 61,1 |

**Beispiel 6** (erfindungsgemäß)

Nach dem in Beispiel 1 beschriebenen Verfahren wurden 840 g (5 mol) HDI durch portionsweise Zugabe von insgesamt 0,32 g Zirkoniumtetraoctanoat umgesetzt. Die Reaktion wurde bei einem NCO-Gehalt von 43,6 % wie in Beispiel 1 beschrieben mit 1,5 g einer 10 %igen Lösung von Isophthalsäuredichlorid in HDI abgebrochen und das Reaktionsgemisch destillativ aufgearbeitet. Man erhielt ein schwach gelb gefärbtes klares Polyisocyanatgemisch, das folgende Kenndaten und Zusammensetzung aufwies:

| | |
|---|---|
| NCO-Gehalt: | 22,0 % |
| monomeres HDI: | 0,23 % |
| Viskosität (23°C): | 1680 mPas |

(fortgesetzt)

| | |
|---|---|
| Iminooxadazindiongruppen: | 21,5 mol-% |
| Isocyanuratgruppen: | 73,6 mol-% |
| Uretdiongruppen: | 4,9 mol-% |
| | |
| Iminooxadiazindion/Isocyanurat: | 22,6 : 77,4 |

**Beispiel 7** (erfindungsgemäß)

Nach dem in Beispiel 1 beschriebenen Verfahren wurden 840 g (5 mol) HDI durch portionsweise Zugabe von insgesamt 0,40 g Zirkonyloctanoat umgesetzt. Die Reaktion wurde bei einem NCO-Gehalt von 43,2 % wie in Beispiel 1 beschrieben mit 0,9 g einer 10 %igen Lösung von Isophthalsäuredichlorid in HDI abgebrochen und das Reaktionsgemisch destillativ aufgearbeitet. Man erhielt ein schwach gelb gefärbtes klares Polyisocyanatgemisch, das folgende Kenndaten und Zusammensetzung aufwies:

| | |
|---|---|
| NCO-Gehalt: | 22,6 % |
| monomeres HDI: | 0,22 % |
| Viskosität (23°C): | 1240 mPas |
| | |
| Iminooxadazindiongruppen: | 27,0 mol-% |
| Isocyanuratgruppen: | 67,5 mol-% |
| Uretdiongruppen: | 5,5 mol-% |
| | |
| Iminooxadiazindion/Isocyanurat: | 28,6 : 71,4 |

Die erfindungsgemäßen Beispiele 1-7 zeigen, dass die Verwendung einer ein- oder mehrkernigen Komplexverbindung von Titan, Zirkonium und/oder Hafnium als Katalysator zu einer sehr effizienten Umsetzung der Isocyanatkomponente zu Polyisocyanaten mit einem Gehalt von mindestens 20 bis über 38 mol-% an Iminooxadiazindiongruppen bezogen auf die Gesamtmenge von Isocyanurat- und Iminooxadiazindiongruppen führt.

## Patentansprüche

1. Verfahren zur Herstellung von Polyisocyanaten, bei dem eine Isocyanatkomponente in Gegenwart einer ein- oder mehrkernigen Komplexverbindung von Titan, Zirkonium und/oder Hafnium als Katalysator zu Polyisocyanaten, die einen Anteil an Iminooxadiazindiongruppen bezogen auf die Gesamtmenge von Isocyanurat- und Iminooxadiazindiongruppen von ≥ 20 mol-% aufweisen, umgesetzt wird.

2. Verfahren nach Anspruch 1, **dadurch gekennzeichnet, dass** die verwendete Komplexverbindung wenigstens ein Zentralatom M aus Titan, Zirkonium und Hafnium umfasst, bei dem ein oder mehrere Liganden über Elemente der 15. und/oder 16. Gruppe des Periodensystems, bevorzugt über Stickstoff, Sauerstoff und/oder Schwefel und besonders bevorzugt über Sauerstoff an das Zentralatom M koordiniert sind.

3. Verfahren nach Anspruch 2, **dadurch gekennzeichnet, dass** als Katalysator wenigstens ein Alkoholat der allgemeinen Formel (I)

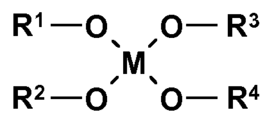

(I)

verwendet wird, in der

M für Titan, Zirkonium oder Hafnium steht,
$R^1$, $R^2$, $R^3$ und $R^4$ für gleiche oder verschiedene Reste stehen und jeweils einen gesättigten oder ungesättigten,

linearen oder verzweigten, gegebenenfalls substituierten aliphatischen, cycloaliphatischen, aromatischen oder araliphatischen, bevorzugt aliphatischen oder cycloaliphatischen Rest bedeuten, der 1 bis 18 Kohlenstoffatome, bevorzugt 1 bis 8 Kohlenstoffatome und gegebenenfalls bis zu 3 Heteroatome aus der Reihe Sauerstoff, Schwefel, Stickstoff, bevorzugt bis zu 3 Sauerstoffatome enthalten kann, und wobei $R^1$, $R^2$, $R^3$ und $R^4$ auch in beliebiger Kombination untereinander zusammen mit M und mindestens zwei Sauerstoffatomen und gegebenenfalls weiteren Stickstoff- oder Sauerstoffatomen heterocyclische Ringe mit 3 bis 6 Kohlenstoffatomen bilden können.

4. Verfahren nach Anspruch 2, **dadurch gekennzeichnet, dass** als Katalysator wenigstens ein Carboxylat der allgemeinen Formeln (II) oder (III)

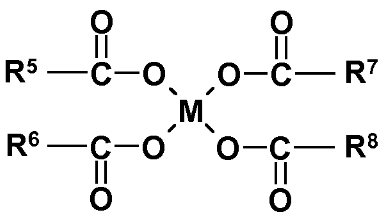 (II) 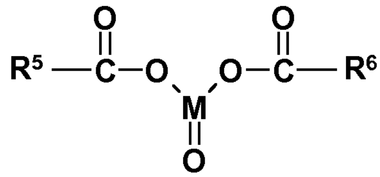 (III)

verwendet wird, in denen

M für Titan, Zirkonium oder Hafnium steht,
$R^5$, $R^6$, $R^7$ und $R^8$ für gleiche oder verschiedene Reste stehen und jeweils einen gesättigten oder ungesättigten, linearen oder verzweigten aliphatischen oder cycloaliphatischen, einen gegebenenfalls substituierten aromatischen oder araliphatischen Rest bedeuten, der 1 bis 18 Kohlenstoffatome und gegebenenfalls bis zu 3 Heteroatome aus der Reihe Sauerstoff, Schwefel, Stickstoff enthalten kann, bevorzugt für gleiche oder verschiedene Reste stehen und jeweils einen gesättigten oder ungesättigten, linearen oder verzweigten aliphatischen oder cycloaliphatischen Rest bedeuten, der 1 bis 18 Kohlenstoffatome und gegebenenfalls bis zu 3 Heteroatome aus der Reihe Sauerstoff, Schwefel, Stickstoff enthalten kann und besonders bevorzugt für gleiche Reste stehen und jeweils einen gesättigten oder ungesättigten, linearen oder verzweigten aliphatischen oder cycloaliphatischen Rest bedeuten, der 1 bis 8 Kohlenstoffatome und gegebenenfalls bis zu 3 Sauerstoffatome enthalten kann, und wobei $R^5$, $R^6$, $R^7$ und $R^8$ in Formel (II) und $R^5$ und $R^6$ in Formel (III) auch in beliebiger Kombination untereinander zusammen mit M und mindestens zwei Sauerstoffatomen und gegebenenfalls weiteren Stickstoff- oder Sauerstoffatomen heterocyclische Ringe mit 3 bis 6 Kohlenstoffatomen und bevorzugt zusammen mit M und zwei Sauerstoffatomen heterocyclische Ringe mit 2 oder 3 Kohlenstoffatomen bilden können.

5. Verfahren nach einem der Ansprüche 1 bis 4, **dadurch gekennzeichnet, dass** der Katalysator in Mengen von 0,0005 bis 2,0 Gew.-%, bevorzugt von 0,0010 bis 1,0 Gew.-% und besonders bevorzugt von 0,0015 bis 0,5 Gew.-% bezogen auf die Isocyanatkomponente eingesetzt wird.

6. Verfahren nach einem der Ansprüche 1 bis 5, **dadurch gekennzeichnet, dass** als Isocyanatkomponente wenigstens ein aliphatisches, cycloaliphatisches oder araliphatisches Isocyanat, bevorzugt wenigstens ein aliphatisches und/oder araliphatisches Diisocyanat und besonders bevorzugt wenigstens 1,6-Diisocyanatohexan, 1,3- oder 1,4-Bis-(isocyanatomethyl)benzol verwendet wird.

7. Verfahren nach einem der Ansprüche 1 bis 6, **dadurch gekennzeichnet, dass** die Isocyanatkomponente mit einer hydroxyfunktionellen Komponente vermischt wird und in Gegenwart des Katalysators zu den Polyisocyanaten umgesetzt wird.

8. Verfahren nach Anspruch 7, **dadurch gekennzeichnet, dass** die verwendete hydroxyfunktionelle Komponente bis zu 0,0049 Gew.-% bezogen auf die Isocyanatkomponente an phenolischen, hydroxyfunktionellen Verbindungen umfasst und bevorzugt frei von phenolischen, hydroxyfunktionellen Verbindungen ist.

9. Verfahren nach Anspruch 7, **dadurch gekennzeichnet, dass** die verwendete aliphatische, hydroxyfunktionelle Verbindung wenigstens einen linearen, verzweigten und gegebenenfalls substituierten Mono-, Di- oder Trialkohol mit 1 bis 18 Kohlenstoffatomen, bevorzugt mit 1 bis 9 Kohlenstoffatomen und besonders bevorzugt mit 1 bis 6 Kohlenstoffatomen umfasst oder daraus besteht.

10. Verfahren nach einem der Ansprüche 1 bis 9, **dadurch gekennzeichnet, dass** die Umsetzung bei einer Temperatur

im Bereich zwischen 40 und 150°C, bevorzugt zwischen 85 und 135°C und besonders bevorzugt zwischen 105 und 125°C durchgeführt wird.

**11.** Verfahren nach einem der Ansprüche 1 bis 10, **dadurch gekennzeichnet, dass** der Katalysator in den Polyisocyanaten verbleibt.

**12.** Polyisocyanate, erhältlich nach einem Verfahren gemäß Anspruch 11.

**13.** Polyisocyanate nach Anspruch 12, **dadurch gekennzeichnet, dass** die Isocyanatgruppen der Polyisocyanate anteilig oder vollständig mit wenigstens einem Blockierungsmittel umgesetzt sind.

**14.** Polyurethane, erhältlich durch Umsetzung der Polyisocyanate nach einem der Ansprüche 12 oder 13 mit wenigstens einer hydroxyfunktionellen Komponente.

**15.** Polyharnstoffe, erhältlich durch Umsetzung der Polyisocyanate nach einem der Ansprüche 12 oder 13 mit wenigstens einer aminofunktionellen Komponente.

## Claims

**1.** Process for producing polyisocyanates comprising reacting an isocyanate component in the presence of a mono- or multinuclear complex of titanium, zirconium and/or hafnium as catalyst to give polyisocyanates having a content of iminooxadiazinedione groups of ≥ 20 mol% based on the total amount of isocyanurate and iminooxadiazinedione groups.

**2.** Process according to Claim 1, **characterized in that** the complex employed comprises at least one central atom M from titanium, zirconium and hafnium, wherein one or more ligands are coordinated to the central atom M via elements of group 15 and/or 16 of the periodic table, preferably via nitrogen, oxygen and/or sulphur and more preferably via oxygen.

**3.** Process according to Claim 2, **characterized in that** at least one alkoxide of general formula (I)

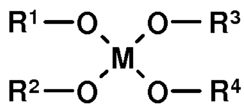
(I)

is employed as catalyst, where

M is titanium, zirconium or hafnium,
$R^1$, $R^2$, $R^3$ and $R^4$ are identical or different radicals and are each a saturated or unsaturated, linear or branched, optionally substituted aliphatic, cycloaliphatic, aromatic or araliphatic, preferably aliphatic or cycloaliphatic, radical which can comprise 1 to 18 carbon atoms, preferably 1 to 8 carbon atoms, and optionally up to 3 heteroatoms selected from oxygen, sulphur, nitrogen, preferably up to 3 oxygen atoms, and where $R^1$, $R^2$, $R^3$ and $R^4$ can also form, in any combination with one another together with M and at least two oxygen atoms and optionally further nitrogen or oxygen atoms, heterocyclic rings having 3 to 6 carbon atoms.

**4.** Process according to Claim 2, **characterized in that** at least one carboxylate of general formulae (II) or (III)

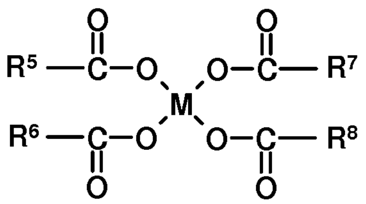
(II)

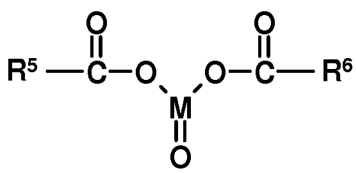
(III)

is employed as catalyst, where

M is titanium, zirconium or hafnium,
$R^5$, $R^6$, $R^7$ and $R^8$ are identical or different radicals and are each a saturated or unsaturated, linear or branched aliphatic or cycloaliphatic, an optionally substituted aromatic or araliphatic radical which can comprise 1 to 18 carbon atoms and optionally up to 3 heteroatoms selected from oxygen, sulphur, nitrogen, preferably are identical or different radicals and are each a saturated or unsaturated, linear or branched aliphatic or cycloaliphatic radical which can comprise 1 to 18 carbon atoms and optionally up to 3 heteroatoms selected from oxygen, sulphur, nitrogen, and more preferably are identical radicals and are each a saturated or unsaturated, linear or branched aliphatic or cycloaliphatic radical which can comprise 1 to 8 carbon atoms and optionally up to 3 oxygen atoms and where $R^5$, $R^6$, $R^7$ and $R^8$ in formula (II) and $R^5$ and $R^6$ in formula (III) can also form, in any combination with one another together with M and at least two oxygen atoms and optionally further nitrogen or oxygen atoms, heterocyclic rings having 3 to 6 carbon atoms, and can preferably form, together with M and two oxygen atoms, heterocyclic rings having 2 or 3 carbon atoms.

**5.** Process according to any one of Claims 1 to 4, **characterized in that** the catalyst is employed in amounts of from 0.0005% to 2.0% by weight, preferably from 0.0010% to 1.0% by weight and more preferably from 0.0015% to 0.5% by weight, based on the isocyanate component.

**6.** Process according to any one of Claims 1 to 5, **characterized in that** the isocyanate component employed is at least one aliphatic, cycloaliphatic or araliphatic isocyanate, preferably at least one aliphatic and/or araliphatic diisocyanate and more preferably at least 1,6-diisocyanatohexane, 1,3- or 1,4-bis(isocyanatomethyl)benzene.

**7.** Process according to any one of Claims 1 to 6, **characterized in that** the isocyanate component is mixed with a hydroxy-functional component and reacted in the presence of the catalyst to give the polyisocyanates.

**8.** Process according to Claim 7, **characterized in that** the hydroxy-functional component employed comprises up to 0.0049% by weight, based on the isocyanate component, of phenolic hydroxy-functional compounds and preferably is free of phenolic hydroxy-functional compounds.

**9.** Process according to Claim 7, **characterized in that** the aliphatic hydroxy-functional compound employed comprises or consists of at least one linear, branched and optionally substituted mono-, di- or trialcohol having 1 to 18 carbon atoms, preferably having 1 to 9 carbon atoms and more preferably having 1 to 6 carbon atoms.

**10.** Process according to any one of Claims 1 to 9, **characterized in that** the reaction is carried out at a temperature in the range between 40°C and 150°C, preferably between 85°C and 135°C and more preferably between 105°C and 125°C.

**11.** Process according to any one of Claims 1 to 10, **characterized in that** the catalyst remains in the polyisocyanates.

**12.** Polyisocyanates obtainable by a process according to Claim 11.

**13.** Polyisocyanates according to Claim 12, **characterized in that** some or all of the isocyanate groups of the polyisocyanates have been reacted with at least one blocking agent.

**14.** Polyurethanes obtainable by reacting the polyisocyanates according to either of Claims 12 and 13 with at least one hydroxy-functional component.

**15.** Polyureas obtainable by reacting the polyisocyanates according to either of Claims 12 and 13 with at least one amino-functional component.

## Revendications

**1.** Procédé de fabrication de polyisocyanates, selon lequel un composant isocyanate est mis en réaction en présence d'un composé complexe à un ou plusieurs noyaux de titane, zirconium et/ou hafnium en tant que catalyseur pour former des polyisocyanates, qui présentent une proportion de groupes iminooxadiazine-dione par rapport à la quantité totale de groupes isocyanurate et iminooxadiazine-dione de $\geq 20$ % en moles.

**2.** Procédé selon la revendication 1, **caractérisé en ce que** le composé complexe utilisé comprend au moins un atome

central M choisi parmi le titane, le zirconium et l'hafnium, un ou plusieurs ligands étant coordonnés à l'atome central M par le biais d'éléments du groupe 15 et/ou 16 du tableau périodique, de préférence par le biais d'azote, d'oxygène et/ou de soufre, et de manière particulièrement préférée par le biais d'oxygène.

**3.** Procédé selon la revendication 2, **caractérisé en ce qu'**au moins un alcoolate de formule générale (I)

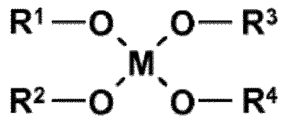

(I)

est utilisé en tant que catalyseur, dans laquelle

M représente titane, zirconium ou hafnium,
$R^1$, $R^2$, $R^3$ et $R^4$ représentent des radicaux identiques ou différents, et signifient chacun un radical aliphatique, cycloaliphatique, aromatique ou araliphatique, saturé ou insaturé, linéaire ou ramifié, éventuellement substitué, de préférence aliphatique ou cycloaliphatique, qui peut contenir 1 à 18 atomes de carbone, de préférence de 1 à 8 atomes de carbone, et éventuellement jusqu'à 3 hétéroatomes de la série constituée par oxygène, soufre, azote, de préférence jusqu'à 3 atomes d'oxygène, $R^1$, $R^2$, $R^3$ et $R^4$ pouvant également former en combinaison quelconque les uns avec les autres conjointement avec M et au moins deux atomes d'oxygène et éventuellement d'autres atomes d'azote ou d'oxygène des cycles hétérocycliques de 3 à 6 atomes de carbone.

**4.** Procédé selon la revendication 2, **caractérisé en ce qu'**au moins un carboxylate de formule générale (II) ou (III)

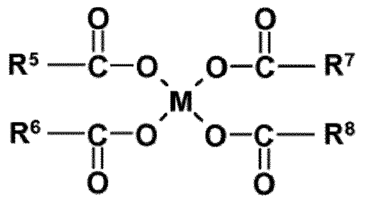

(II)

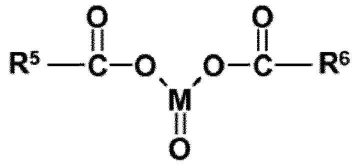

(III)

est utilisé en tant que catalyseur,
dans lesquelles

M représente titane, zirconium ou hafnium,
$R^5$, $R^6$, $R^7$ et $R^8$ représentent des radicaux identiques ou différents, et signifient chacun un radical aliphatique ou cycloaliphatique, saturé ou insaturé, linéaire ou ramifié, un radical aromatique ou araliphatique, éventuellement substitué, qui peut contenir 1 à 18 atomes de carbone et éventuellement jusqu'à 3 hétéroatomes de la série constituée par oxygène, soufre, azote, de préférence représentent des radicaux identiques ou différents, et signifient chacun un radical aliphatique ou cycloaliphatique saturé ou insaturé, linéaire ou ramifié, qui peut contenir 1 à 18 atomes de carbone et éventuellement jusqu'à 3 hétéroatomes de la série constituée par oxygène, soufre, azote, et de manière particulièrement préférée représentent des radicaux identiques, et signifient chacun un radical aliphatique ou cycloaliphatique saturé ou insaturé, linéaire ou ramifié, qui peut contenir 1 à 8 atomes de carbone et éventuellement jusqu'à 3 atomes d'oxygène, $R^5$, $R^6$, $R^7$ et $R^8$ dans la formule (II) et $R^5$ et $R^6$ dans la formule (III) pouvant également former en combinaison quelconque les uns avec les autres conjointement avec M et au moins deux atomes d'oxygène et éventuellement d'autres atomes d'azote ou d'oxygène des cycles hétérocycliques de 3 à 6 atomes de carbone, et de préférence conjointement avec M et deux atomes d'oxygène des cycles hétérocycliques de 2 ou 3 atomes de carbone.

**5.** Procédé selon l'une quelconque des revendications 1 à 4, **caractérisé en ce que** le catalyseur est utilisé en quantités de 0,0005 à 2,0 % en poids, de préférence de 0,0010 à 1,0 % en poids et de manière particulièrement préférée de 0,0015 à 0,5 % en poids, par rapport au composant isocyanate.

**6.** Procédé selon l'une quelconque des revendications 1 à 5, **caractérisé en ce qu'**en tant que composant isocyanate, au moins un isocyanate aliphatique, cycloaliphatique ou araliphatique, de préférence au moins un diisocyanate aliphatique et/ou araliphatique, et de manière particulièrement préférée au moins le 1,6-diisocyanatohexane, le 1,3- ou 1,4-bis-(isocyanatométhyl)benzène est utilisé.

7. Procédé selon l'une quelconque des revendications 1 à 6, **caractérisé en ce que** le composant isocyanate est mélangé avec un composant à fonction hydroxy et mis en réaction en présence du catalyseur pour former les polyisocyanates.

8. Procédé selon la revendication 7, **caractérisé en ce que** le composant à fonction hydroxy utilisé comprend jusqu'à 0,0049 % en poids, par rapport au composant isocyanate, de composés phénoliques à fonction hydroxy, et est de préférence exempt de composés phénoliques à fonction hydroxy.

9. Procédé selon la revendication 7, **caractérisé en ce que** le composé aliphatique à fonction hydroxy utilisé comprend au moins un mono-, di- ou trialcool linéaire, ramifié et éventuellement substitué, de 1 à 18 atomes de carbone, de préférence de 1 à 9 atomes de carbone et de manière particulièrement préférée de 1 à 6 atomes de carbone, ou en est constitué.

10. Procédé selon l'une quelconque des revendications 1 à 9, **caractérisé en ce que** la réaction est réalisée à une température dans la plage comprise entre 40 et 150 °C, de préférence entre 85 et 135 °C, et de manière particulièrement préférée entre 105 et 125 °C.

11. Procédé selon l'une quelconque des revendications 1 à 10, **caractérisé en ce que** le catalyseur reste dans les polyisocyanates.

12. Polyisocyanates, pouvant être obtenus par un procédé selon la revendication 11.

13. Polyisocyanates selon la revendication 12, **caractérisés en ce que** les groupes isocyanate des polyisocyanates sont mis en réaction en partie ou en totalité avec au moins un agent bloquant.

14. Polyuréthanes, pouvant être obtenus par mise en réaction des polyisocyanates selon l'une quelconque des revendications 12 ou 13 avec au moins un composant à fonction hydroxy.

15. Polyurées, pouvant être obtenues par mise en réaction des polyisocyanates selon l'une quelconque des revendications 12 ou 13 avec au moins un composant à fonction amino.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 61151179 A
- EP 0798299 A1
- EP 0540985 B
- EP 0959087 B
- EP 1287052 B
- EP 0403921 B


### In der Beschreibung aufgeführte Nicht-Patentliteratur


- *Justus Liebigs Annalen der Chemie,* 1949, vol. 562, 75-136